(19) Europäisches Patentamt
European Patent Office
Office européen des brevets

(11) **EP 0 586 769 B1**

(12) **EUROPÄISCHE PATENTSCHRIFT**

(45) Veröffentlichungstag und Bekanntmachung des Hinweises auf die Patenterteilung:
**23.04.1997 Patentblatt 1997/17**

(51) Int Cl.6: **G02B 17/06**

(21) Anmeldenummer: **92810683.0**

(22) Anmeldetag: **07.09.1992**

(54) **Optisches Abbildungssystem**

Imaging system

Système formant l'image

(84) Benannte Vertragsstaaten:
**CH DE FR GB IT LI**

(43) Veröffentlichungstag der Anmeldung:
**16.03.1994 Patentblatt 1994/11**

(73) Patentinhaber: **GRETAG IMAGING AG**
**CH-8105 Regensdorf (CH)**

(72) Erfinder: **Mast, Fred, Dr.**
**CH-9500 Wil (CH)**

(74) Vertreter: **Schwabe - Sandmair - Marx**
**Stuntzstrasse 16**
**81677 München (DE)**

(56) Entgegenhaltungen:
**EP-A- 0 157 325        EP-A- 0 323 845**
**US-A- 4 929 040**

## Beschreibung

Die Erfindung betrifft ein optisches Abbildungssystem gemäss Oberbegriff von Patentanspruch 1.

Optische Abbildungssysteme, die einen Gegenstand in eine zur Gegenstandsebene parallelen Bildebene abbilden, wobei das in der Bildebene erzeugte Bild relativ zum Gegenstand um 90° verdreht ist, sind in zahlreichen Ausführungen bekannt. Beispiele hierfür sind das sogenannte Dove/Amici-Prisma, das Abbé/König-Prisma oder das Schmidt/Pechan-Prisma. Diese Abbildungssysteme unterscheiden sich signifikant durch die Anzahl der spiegelnden Flächen (Dove/Amici: 1, Abbe/König:3, Schmidt/Pechan: 5). Sie umfassen aber allesamt eine ungerade Anzahl spiegelnder Flächen, sodass das erzeugte Bild zwar jeweils um 90° relativ zum Gegenstand in der Bildebene verdreht ist, es ist allerdings auch jeweils von der Orientierung her invertiert (aus einem Rechtssystem wird ein Linkssystem und umgekehrt).

Von Interesse sind den Gegenstand um 90° verdrehende Abbildungssysteme beispielsweise für den Einsatz in fotografischen Kopiergeräten bzw. fotografischen Verarbeitungsstrecken. Dort treten nämlich beim Erstellen von Kopien von Kopiervorlagen, beispielsweise von den Negativen eines Negativfilms, sowohl Bildfelder im Vollformat (full-frame, beispielsweise 24 mm x 36 mm) als auch auch Bildfelder im Halbformat (half-frame, beispielsweise 24 mm x 18 mm) auf. Die Halbformatbildfelder sind dabei auf dem Negativfilm relativ zu den Vollformatbildfeldern um 90° gedreht wegen der einheitlichen Filmbreite. Beim üblichen einfachen Aufbelichten auf das Papier wäre dann das aufkopierte Bild der Vorlage im Halbformat auf dem Papier gegenüber dem Bild einer Vorlage im Vollformat ebenfalls um 90° verdreht.

Filme mit Vorlagen (Bildfeldern) im Vollformat treten in aller Regel häufiger auf als Filme mit den um 90° gegenüber diesen verdrehten Halbformaten. Dennoch sind auch Filme mit den verdrehten Halbformaten heute so gängig und treten in einer so grossen Anzahl auf, dass für eine effiziente Auslastung von Kopiergeräten oder fotografischen Verarbeitungsstrecken auch die um 90° verdrehten Vorlagen im Halbformat auf das Papier aufkopierbar sein müssen, und zwar derart, dass die Kopien von den um 90° verdrehten Vorlagen im Halbformat auf dem Papier die gleiche Lage und auch die gleichen Abmessungen aufweisen wie die Kopien von den Vorlagen im Vollformat.

Diese Forderung leuchtet unmittelbar ein: Der Kunde möchte nämlich, gleichgültig ob er beim Fotografieren einen Film mit Vorlagen im Halbformat oder im Vollformat verwendet hat, Papierkopien beispielsweise in dem besonders gängigen Format 9 cm x 13 cm erhalten. Auf der anderen Seite werden in den Kopiergeräten üblicherweise beim Kopieren zunächst die einzelnen Filme oder Filmstreifen zu einem langen Band zusammengefügt. Dieses lange Band wird dann bei der Aufbelichtung auf das Papier bearbeitet. Gleichermassen wird für Kopien ein und desselben Formats ein langes Band lichtempfindlichen Papiers verwendet. Dieses lange Papierband hat eine einheitliche Breite (jeweils für Kopien ein und desselben Formats). Würde man nun versuchen, sowohl die Vorlagen im Vollformat als auch die um 90° verdrehten Vorlagen im Halbformat mit einheitlicher Vergrösserung einfach auf das Papier aufzukopieren, so würde die Papierbreite, die auf die kleinere Dimension (beispielsweise auf die Dimension 9 cm) der Kopien von Vorlagen im Vollformat abgestimmt ist, für die Kopien von Vorlagen im Halbformat nicht ausreichen. Selbst wenn die Papierbreite ausreichend bemessen wäre (was für Kopien von Vorlagen im Vollformat einen grösseren Papierüberstand am Rand zur Folge hätte), müsste das Papierband jeweils um eine unterschiedliche Strecke vorgeschoben werden, bevor die nächste Kopie vom Papierband abgeschnitten werden kann, je nachdem, ob die nächste Kopie auf dem Papierband eine Kopie einer Vorlage im Vollformat oder im Halbformat ist, da die Kopie der Vorlage im Halbformat ja um 90° gedreht auf das Papierband aufkopiert wäre.

Es wurden daher in der Vergangenheit schon Kopiergeräte vorgeschlagen, bei denen im Falle von um 90° verdrehten Vorlagen im Halbformat diese verdrehten Vorlagen um 90° "zurückgedreht" auf das Papier aufkopiert werden und somit solche Kopien auf dem Papier in der gleichen Lage sind wie Kopien von ohne Verdrehung aufkopierten Vorlagen im Vollformat. Für solche Zwecke sind allerdings die eingangs diskutierten Abbildungssysteme ungeeignet, da sie wie bereits erwähnt eine ungerade Anzahl von Spiegelflächen aufweisen und somit zwar die Drehung um 90° erreicht würde, die Orientierung der auf den Vorlagen abgebildeten Gegenständen aber gleichzeitig invertieren würden. Eine gerade Anzahl von Spiegelflächen, mit deren Hilfe ebenfalls eine Verdrehung um 90° erwirkt werden kann, erhält hingegen die Orientierung aufrecht der abgebildeten Gegenstände aufrecht. Kopiergeräte, die eine solche gerade Anzahl an Spiegelflächen aufweisen, sind beispielsweise in der US 4 743 103 und in der EP 0 157 325 beschrieben.

Die in der US 4 743 103 beschriebene Lösung mit Hilfe zweier Schmidt/Pechan-Prismen und einer grösseren Anzahl Linsen ist allerdings in mehrerer Hinsicht nachteilig. Zum einen ist sie nachteilig hinsichtlich des Platzbedarfs (ein Abbildungssystem für den Einsatz in einem Kopiergerät kann nicht beliebig gross werden). Vor allem wird aber auch der Aufwand hinischtlich der hohen Präzision bei der Justage der spiegelnden Flächen der Prismen mit zunehmender Anzahl der Spiegelungen (in dem hier vorgeschlagenen Beispiel sind es zehn Spiegelungen) sehr hoch, so dass die getreue Wiedergabe der Vorlage durch die erstellte Kopie nur mit sehr hohem Aufwand verbunden ist bzw. bei einer weniger präzisen Justage der Prismen und ihrer spiegelnden Flächen erheblich beeinträchtigen werden kann.

Die in der EP 0 157 325 vorgeschlagene Variante umfasst prinzipiell insgesamt sechs Spiegelflächen, vier von diesen sechs Spiegelflächen um die gewünschte Drehung um 90° zu erwirken. Allerdings würde nach vier Spiegelungen die eingangsseitige optische Achse und die ausgangsseitige optische Achse des Systems nach diesen vier Spiegelungen nicht zusammenfallen und das Bild würde entsprechend versetzt auf das Papier aufkopiert. Ein solcher Versatz hat aber einerseits einen erhöhten Papierverbrauch zur Folge, da die Lücken auf dem Papierband zwischen Kopien, die von Vorlagen im Halbformat erstellt werden, und Kopien, die von Vorlagen im Vollformat erstellt werden, grösser sind, als wenn nur Kopien von Vorlagen im Vollformat erstellt werden. Als Folge dieses Versatzes fällt dann auch zusätzlicher Aufwand an, was die Transportmittel und die Schneideinrichtung eines solchen Kopiergeräts bzw. einer fotografischen Verarbeitungsstrecke betrifft: Das Papierband muss nämlich jeweils um einen unterschiedlichen Weg vorgeschoben werden, bevor die nächste Kopie vom Papierband abgeschnitten werden kann, je nachdem ob eine Kopie von einer Vorlage im Halbformat oder von einer Vorlage im Vollformat als nächste Kopie auf dem Papierband folgt. Um einen solchen Versatz und den damit verbundenen zusätzlichen Aufwand zu vermeiden, sind in dem Abbildungssystem gemäss der EP 0 157 325 zwei weitere Spiegelflächen vorgesehen, die dafür sorgen, dass das um 90° gedrehte Bild nicht versetzt, sondern in der gleichen Lage und Position auf das Papier aufkopiert wird wie ein ungedrehtes Bild einer Vorlage im Vollformat. Zusätzliche Spiegelflächen bedeuten aber einen grösseren Platzbedarf, vom grösseren Aufwand durch die Verwendung mehrerer Spiegel abgesehen. Vor allen Dingen ist aber nach wie vor der Aufwand hinsichtlich der hohen Präzision bei der Justage der Prismen und ihrer spiegelnden Flächen sehr gross, so dass eine getreue Wiedergabe der Vorlage durch die erstellte Kopie entweder nur mit sehr grossem Aufwand erreicht werden kann bzw. bei weniger präziser Justage der Prismen und ihrer spiegelnden Fläche beeinträchigt werden kann.

Es ist daher eine Aufgabe der Erfindung, ein Abbildungssystem zu schaffen, welches ein Bild einer um 90° gegenüber einer Vorlage im Vollformat gedrehten Vorlage im Halbformat einerseits um 90° verdreht, so dass das Bild der Vorlage im Halbformat in der gleiche Lage und Position auf das Papierband abgebildet wird wie ein Bild einer Vorlage im Vollformat, bei der keine Drehung des Bilds erforderlich ist. Gleichzeitig soll das Abbildungssystem möglichst wenig aufwendig sein, insbesondere hinsichtlich der erforderlichen Präzision bei der Justage der erforderlichen spiegelnden Flächen.

Erfindungsgemäss wird diese Aufgabe durch ein optisches Abbildungssystem gelöst, dass nur vier spiegelnde Flächen umfasst. Dabei sind die spiegelnden Flächen in einer besonderen Art und Weise angeordnet. Die im Lichtweg erste spiegelnde Fläche erzeugt ein erstes Spiegelbild der eingangsseitigen optischen Achse. Dieses erste Spiegelbild der eingangsseitigen optischen Achse spannt zusammen mit der eingangsseitigen optischen Achse eine erste Ebene auf. Die im Lichtweg der ersten spiegelnden Fläche nachfolgende zweite spiegelnde Fläche erzeugt ein zweites Spiegelbild der eingangsseitigen optischen Achse, wobei dieses zweite Spiegelbild der eingangsseitigen optischen Achses aus der ersten Ebene heraustritt. Das erste und das zweite Spiegelbild der eingangsseitigen optischen Achse spannen also eine von der ersten Ebene verschiedene zweite Ebene auf. Die im Lichtweg der zweiten spiegelnden Fläche nachfolgende dritte spiegelnde Fläche erzeugt ein drittes Spiegelbild der eingangsseitigen optischen Achse, wobei dieses dritte Spiegelbild der eingangsseitigen optischen Achse aus der zweiten Ebene heraustritt und die Verlängerung der eingangsseitigen bzw. der ausgangsseitigen optischen Achse schneidet. Die im Lichtweg der dritten spiegelnden Fläche nachfolgende vierte spiegelnde Fläche erzeugt schlussendlich ein viertes Spiegelbild der eingangsseitigen optischen Achse erzeugt, welches mit der ausgangsseitigen optischen Achse zusammenfällt. Durch die Verwendung von nur vier spiegelnden Flächen wird der Aufwand sowohl hinsichtlich der Anzahl der erforderlichen spiegelnden Flächen, insbesondere aber auch hinsichtlich der erforderlichen hohen Präzision (kleine Toleranzen) bei deren Justage, minimiert.

In verschiedenen vorteilhaften Ausführungsbeispielen sind dabei die spiegelnden Flächen auf unterschiedliche Weise angeordnet. Die eingangsseitige optische Achse schliesst mit dem Lot auf die erste spiegelnde Fläche einen Einfallswinkel von 45° bis 60° ein; das Lot auf die zweite spiegelnde Fläche weist bezüglich der ersten Ebene einen Azimut von 45° bis 120° und bezüglich der Azimutebene eine Elevation von 40° bis 70° auf. Das Lot auf die dritte spiegelnde Fläche weist bezüglich der ersten Ebene einen Azimut von 60° bis 85° und bezüglich der Azimutebene eine Elevation von -10° bis 45° auf, und das Lot auf die vierte spiegelnde Fläche bezüglich der ersten Ebene einen Azimut von 120° bis 160° und bezüglich der Azimutebene eine Elevation von -15° bis -45°.

In einem besonders vorteilhaften Ausführungsbeispiel schliesst die eingangsseitige optische Achse mit dem Lot auf die erste spiegelnde Fläche einen Einfallswinkel von 60° ein. In diesem Ausführungsbeispiel weist das Lot auf die zweite spiegelnde Fläche bezüglich der ersten Ebene einen Azimut von 109° bis 110°, insbesondere einen Azimut von 109.734°, auf, und bezüglich der Azimutebene eine Elevation von 64° bis 65°, insbesondere eine Elevation von 64.296°. Das Lot auf die dritte spiegelnde Fläche weist bezüglich der ersten Ebene einen Azimut von 70° bis 71°, insbesondere einen Azimut von 70.529°, auf, und bezüglich der Azimutebene eine Elevation von 26° bis 27°, insbesondere eine Elevation von 16.779°. Schliesslich weist in diesem Ausführungsbeispiel das Lot auf die vierte spiegelnde Fläche bezüglich der ersten Ebene einen Azimut von 149° bis 151°, insbesondere einen Azimut von 150°, auf, und bezüglich der Azimutebene eine Elevation von -35° bis -36°, insbesondere eine Elevation von -35.260°.

Dabei beträgt in diesem Ausführungsbeispiel das Verhältnis der Längen der Lichtwege von der ersten spiegelnden Fläche zur zweiten spiegelnden Fläche, von der zweiten zur dritten Fläche und von der dritten zur vierten Fläche $\sqrt{2}$ :1:1.

In einem weiteren vorteilhaften Ausführungsbeispiel umfasst das erfindungsgemässe Abbildungssystem ein erstes und ein zweites gleichartiges Halbsystem mit jeweils zwei spiegelnden Flächen. Das zweite Halbsystem ist dabei so angeordnet, dass dessen Anordnung aus der Anordnung des ersten Halbsystems durch eine Spiegelung dieses ersten Halbsystems an einer zur optischen Achse senkrechten Trennebene und durch eine anschliessende Drehung des gespiegelten ersten Halbsystems um einen Drehwinkel um die ausgansseitige optische Achse herum hervorgeht.

In einem weiteren besonders vorteilhaften Ausführungsbeispiel oder in einer Weiterbildung dieses gerade erläuterten Ausführungsbeispiels schliesst die eingangsseitige optische Achse mit dem Lot auf die erste spiegelnde Fläche erneut einen Einfallswinkel von 60° ein. Das Lot auf die zweite spiegelnde Fläche weist bezüglich der ersten Ebene einen Azimut von 109° bis 110°, insbesondere einen Azimut von 109.734°, auf, und bezüglich der Azimutebene eine Elevation von 64° bis 65°, insbesondere eine Elevation von 64.296°. Weiterhin weist bei diesem Ausführungsbeispiel das Lot auf die dritte spiegelnde Fläche bezüglich der ersten Ebene einen Azimut von 81° bis 82°, insbesondere einen Azimut von 81.548°, auf, und bezüglich der Azimutebene eine Elevation von -4° bis -5°, insbesondere eine Elevation von -4.850°. Schliesslich weist das Lot auf die vierte spiegelnde Fläche bezüglich der ersten Ebene einen Azimut von 121° bis 122°, insbesondere einen Azimut von 121.482°, auf, und bezüglich der Azimutebene eine Elevation von -16° bis -17°, insbesondere eine Elevation von -16.778°.

Dabei beträgt bei diesem Ausführungsbeispiel das Verhältnis der Längen der Lichtwege von der ersten spiegelnden Fläche zur zweiten spiegelnden Fläche, von der zweiten zur dritten Fläche und von der dritten zur vierten Fläche $1 : \sqrt{2} : 1$.

In einem weiteren besonders vorteilhaften Ausführungsbeispiel des erfindungsgemässen Abbildungssystems schliesst die eingangsseitige optische Achse mit dem Lot auf die erste spiegelnde Fläche einen Einfallswinkel von 45° ein. Das Lot auf die zweite spiegelnde Fläche weist bezüglich der ersten Ebene einen Azimut von 138° bis 139°, insbesondere einen Azimut von 138.093°, auf, und bezüglich der Azimutebene eine Elevation von 44° bis 46°, insbesondere eine Elevation von 45°. Das Lot auf die dritte spiegelnde Fläche weist bezüglich der ersten Ebene einen Azimut von 64° bis 65°, insbesondere einen Azimut von 64.082°, auf, und bezüglich der Azimutebene eine Elevation von 31° bis 32°, insbesondere eine Elevation von 31.821°. Schliesslich weist das Lot auf die vierte spiegelnde Fläche bezüglich der ersten Ebene einen Azimut von 154° bis 155°, insbesondere einen Azimut von 154.241°, auf, und bezüglich der Azimutebene eine Elevation von -38° bis -39°, insbesondere eine Elevation von -38.268°.

Dabei beträgt bei diesem Ausführungsbeispiel das Verhältnis der Längen der Lichtwege von der ersten spiegelnden Fläche zur zweiten spiegelnden Fläche, von der zweiten zur dritten Fläche und von der dritten zur vierten Fläche 1:0.7:1.1417. Beispielsweise beträgt die normierte Länge des Lichtwegs mit der Masszahl 1 etwa 35-45mm, insbesondere etwa 40mm. Die spiegelnden Flächen können als Totalreflexionsflächen ausgebildet sein. Für den Fall, dass die spiegelnden Flächen als diskrete einzelne Flächen ausgeführt sind, können sie als metallisch beschichtete Glasflächen realisiert sein, wobei das verwendete Glas einen Brechungsindex von etwa 1.7 aufweist.

Es ist aber auch möglich, dass das Abbildungssystem einen oder mehrere Glaskörper umfassen kann, an dem/denen die entsprechend angeordneten Reflexionsflächen vorgesehen sein können. Das Licht wird dann nach seinem Eintritt in den Glaskörper im Glas körper geführt. Solange der Einfallswinkel des Lichts auf die jeweilige Reflexionsfläche (spiegelnde Fläche) dann grösser ist als der Grenzwinkel, bei dem Totalreflexion auftritt, brauchen die Flächen nicht verspiegelt (metallisch beschichtet) sein. Wird dieser Grenzwinkel jedoch unterschritten, muss die entsprechende spiegelnde Fläche verspiegelt sein.

Optional kann zusätzlich ein Objektiv zur Kompensation von Farbfehlern und/oder geometrischen optischen Fehlern (z.B. sphärische Aberration) vorgesehen sein, welches der ersten spiegelnden Fläche vorgeschaltet oder der vierten spiegelnden Fläche nachgeschaltet ist.

Im folgenden wird die Erfindung anhand der Zeichnung näher erläutert; es zeigen in schematischer Anordnung

Fig. 1     ein erstes Ausführungsbeispiel der Anordnung der spiegelnden Flächen des erfindungsgemässen Abbildungssystems

Fig. 1a-d     die Lage des Lots auf die einzelnen im Strahlengang aufeinanderfolgenden spiegelnden Flächen des ersten Ausführungsbeispiels des Abbildungssystems

Fig. 2     ein zweites Ausführungsbeispiel der Anordnung der spiegelnden Flächen des erfindungsgemässen Abbildungssystems

Fig. 2a-d     die Lage des Lots auf die einzelnen im Strahlengang aufeinanderfolgenden spiegelnden Flächen des zweiten Ausführungsbeispiels des Abbildungssystems

Fig. 3     ein drittes Ausführungsbeispiel der Anordnung der spiegelnden Flächen des erfindungsgemässen Abbildungssystems

Fig. 3a-d       die Lage des Lots auf die einzelnen im Strahlengang aufeinanderfolgenden spiegelnden Flächen des dritten Ausführungsbeispiels des Abbildungssystems

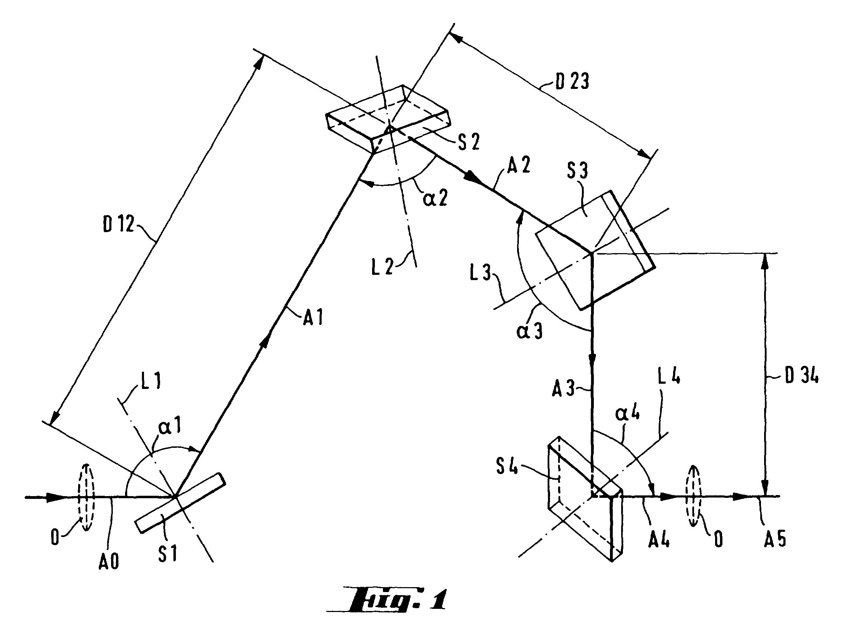

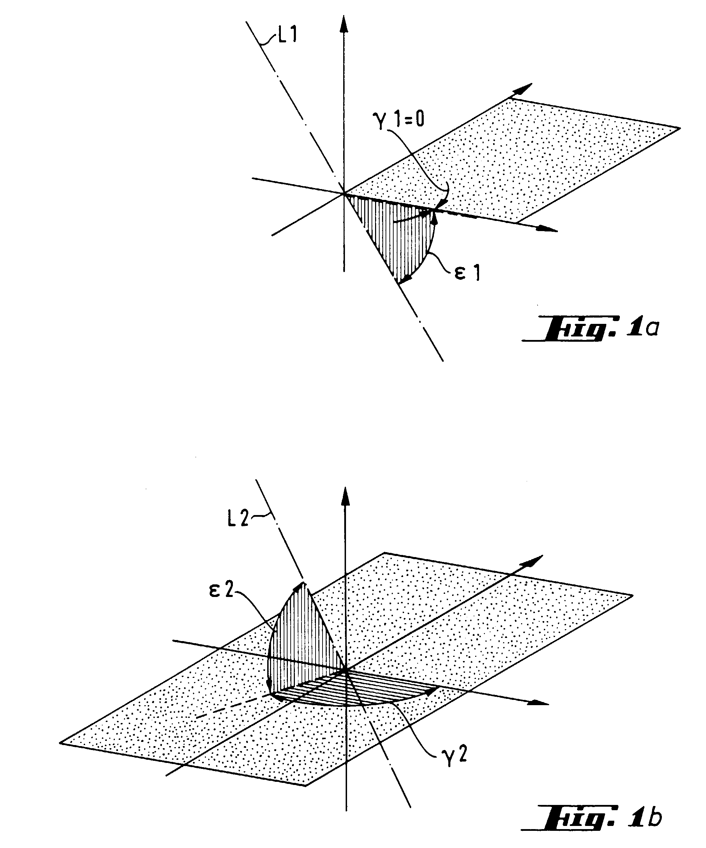

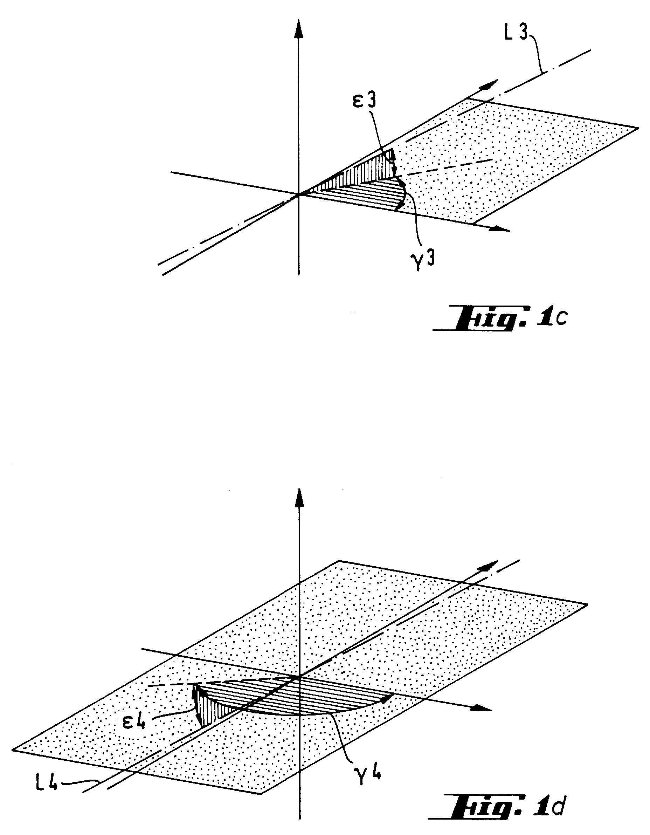

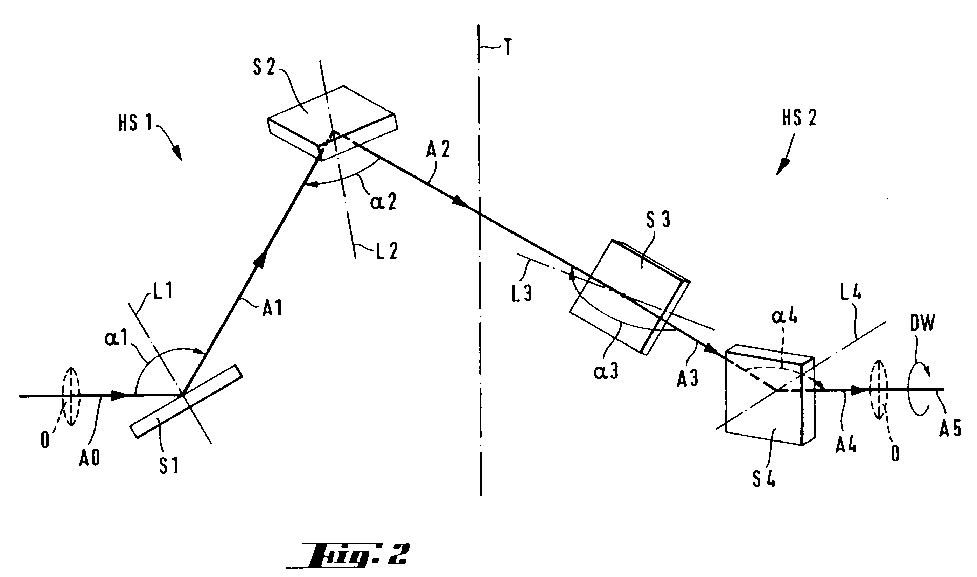

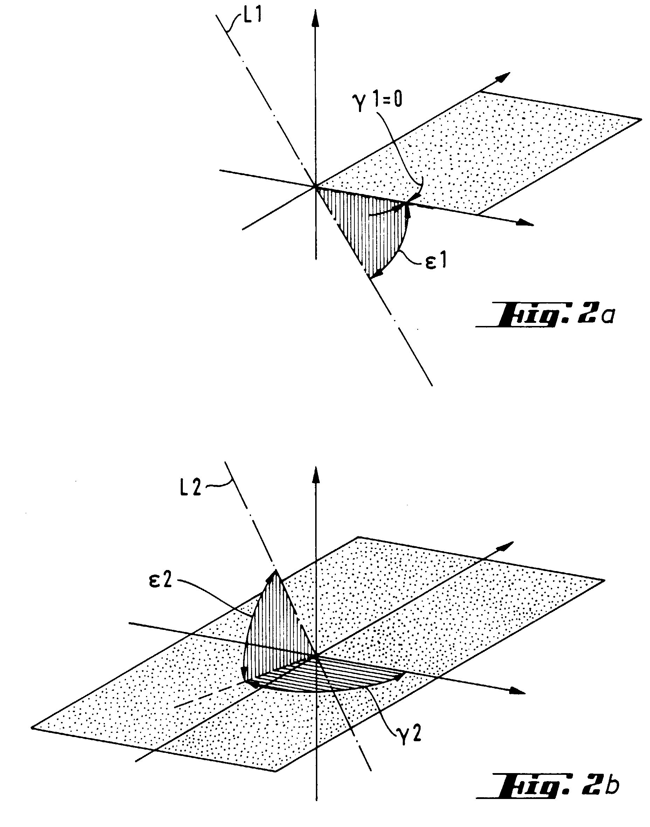

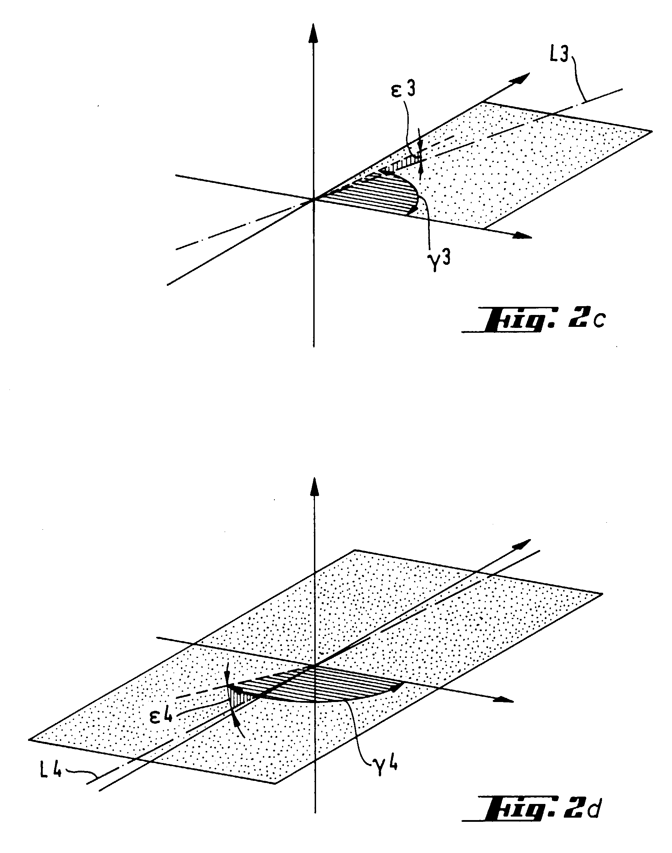

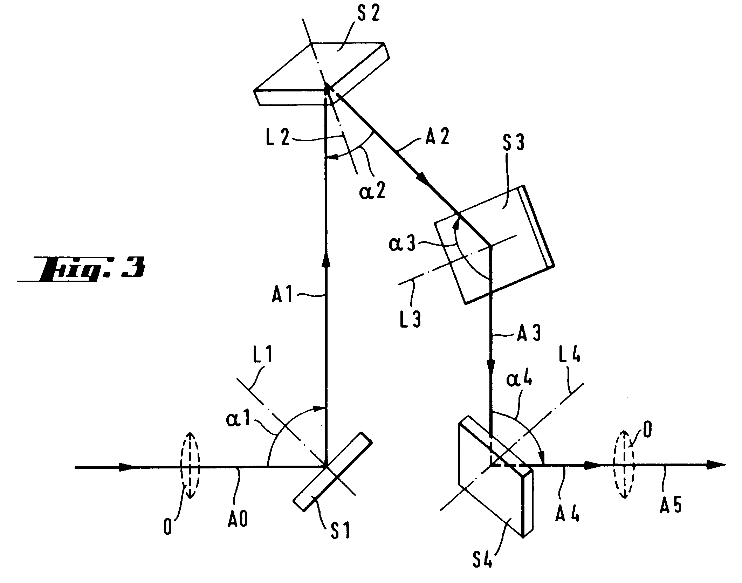

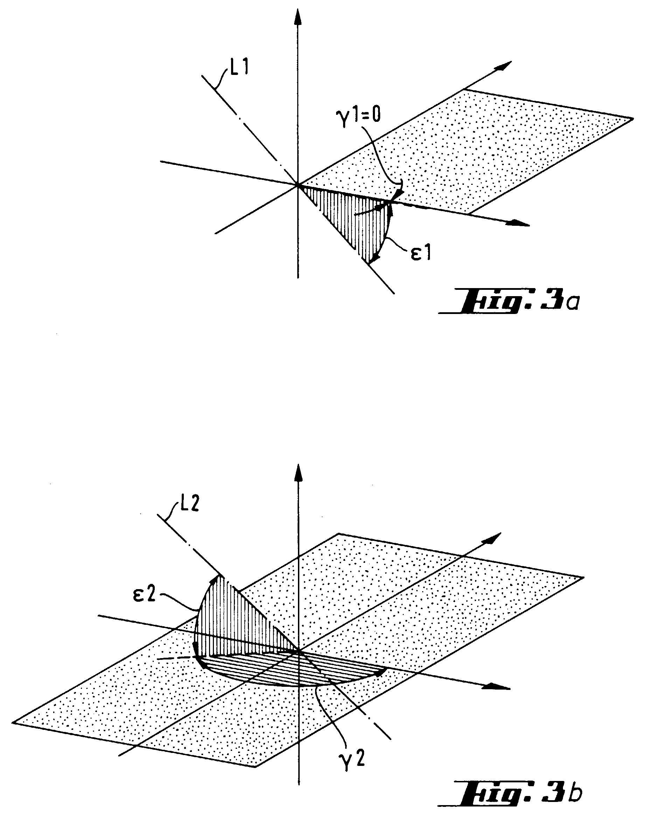

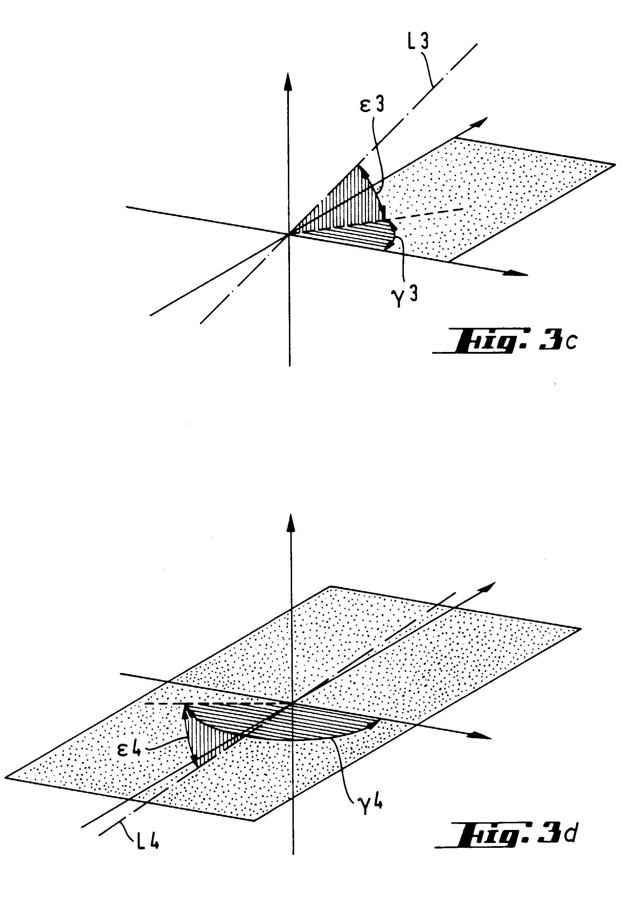

In Fig. 1, Fig. 2 und Fig. 3 sind bezeichnet mit S1 die im Lichtweg erste spiegelnde Fläche, mit S2 die im Lichtweg zweite spiegelnde Fläche, mit S3 die im Lichtweg dritte spiegelnde Fläche und mit S4 die im Lichtweg vierte spiegelnde Fläche. L1,L2,L3 und L4 in Fig. 1a-d, Fig. 2a-d und in Fig. 3a-d bezeichnen das Lot auf die jeweilige spiegelnde Fläche S1,S2,S3 und S4, wobei die Lage des jeweiligen Lots jeweils in einem kleinen dreidimensionalen Koordinatensystem angedeutet ist. Ferner ist in Fig. 1, in Fig. 2 und in Fig. 3 noch ein Objektiv O strichliert angedeutet, welches der ersten spiegelnden Fläche S1 bezüglich des Lichtwegs vorgeschaltet bzw. der vierten spiegelnden Fläche S4 nachgeschaltet sein kann. Ausserdem ist in diesen Figuren noch die eingangsseitige optische Achse A0, das erste Spiegelbild AI der eingangsseitigen optischen Achse A0, das zweite Spiegelbild A2 der eingangsseitigen optischen Achse A0, das dritte Spiegelbild A3 der eingangsseitigen optischen Achse A0, sowie das vierte Spiegelbild A4 der eingangsseitigen optischen Achse A0 erkennbar, welches mit der ausgangsseitigen optischen Achse A5 zusammenfällt.

Anhand des Ausführungsbeispiels der Fig. 1 soll nun die prinzipielle Funktionsweise des Abbildungssystems erläutert werden. Dabei soll zunächst bemerkt werden, dass die spiegelnden Flächen S1,S2,S3 und S4 von ihren Abmessungen nicht auf die dargestellten Grössen limitiert sind, sondern selbstverständlich auch grösser oder kleiner bemessen sein können. Für das Verständnis der Funktionsweise sind jedoch in den Zeichnungsfiguren aus Gründen der besseren Übersichtlichkeit diese Abmessungen gewählt worden. Der Einfachheit halber wird nur der Lichtweg anhand eines Lichtstrahls erläuten, der entlang der eingangsseitigen optischen Achse A0 das Abbildungssystem beaufschlagt.

Ein solcher Strahl, der entlang der eingangsseitigen optischen Achse A0 in der Zeichenebene auf die erste spiegelnde Fläche S1 auftrifft, wird von dieser reflektiert. Die in Fig. 1 dargestellte erste spiegelnde Fläche S1 ist dabei so angeordnet, dass der reflektierte Strahl und damit das erste Spiegelbild A1 der eingangsseitigen optischen Achse A0 ebenfalls wieder in der Zeichenebene verläuft, dass also der einfallende Strahl und der von der ersten spiegelnden Fläche S1 reflektierte Strahl bzw. die eingangsseitige optische Achse A0 und deren erstes Spiegelbild AI eine erste Ebene aufspannen. Diese Ebene entspricht in der Fig. 1 der Zeichenebene. Dabei beträgt der Einfallswinkel, der von dem entlang der eingangsseitigen optischen Achse A0 einfallenden Strahl und vom Lot L1 auf die erste spiegelnde Fläche S1 eingeschlossen wird, hier 60°, sodass der gesamte von der eingangsseitigen optischen Achse A0 und deren erstem Spiegelbild A1 eingeschlossene Winkel $\alpha1 = 120°$ beträgt. Die Lage des Lots L1 auf die spiegelnde Fläche S1 ist in Fig. 1a dargestellt. Aus dieser Figur ist erkennbar, dass das Lot L1 in der Zeichenebene liegt und eine Elevation von $\varepsilon1 = -60°$ in Bezug auf die Ebene des Azimuts (punktiert) aufweist.

Der von der ersten spiegelnden Fläche S1 reflektierte und entlang des ersten Spiegelbilds A1 der eingangsseitigen optischen Achse verlaufende Lichtstrahl trifft in seinem weiteren Verlauf auf die zweite spiegelnde Fläche S2. Diese Fläche S2 ist so angeordnet, dass das Lot L2 (Fig. 1b) auf diese Fläche S2 bezüglich der ersten Ebene (hier: Zeichenebene) einen Azimut von $\gamma2 = 109.374°$ und bezüglich der Ebene des Azimuts (Azimutebene, punktiert) eine Elevation von $\varepsilon2 = 64.296°$ aufweist, wie aus der Fig. 1b zu erkennen ist. Der auf diese Fläche S2 auftreffende Strahl wird durch die Reflexion aus der Zeichenebene herausgedreht (Fig. 1), in dem hier gezeigten Darstellung also nach hinten aus der Zeichenebene heraus, wobei der von der ersten Fläche S1 reflektierte und die Fläche S2 beaufschlagende Strahl bzw. das erste Spiegelbild A1 der eingangsseitigen optischen Achse und der von der dieser Fläche S2 reflektierte Strahl bzw. das zweite Spiegelbild A2 der eingangsseitigen optischen Achse einen Winkel $\alpha2 = -90°$ einschliessen und eine von der ersten Ebene (hier: Zeichenebene) verschiedene zweite Ebene aufspannen. Dabei ist die Orientierung der Winkel $\alpha i$ immer so gewählt, dass sie in der Zeichenebene im Uhrzeigersinn verläuft. Dementsprechend ergeben sich für einige Winkel $\alpha i$ negative Zahlenwerte.

In der weiteren Folge des Lichtwegs trifft der von der zweiten spiegelnden Fläche S2 reflektierte und entlang des zweiten Spiegelbilds A2 der eingangsseitigen optischen Achse verlaufende Lichtstrahl auf die dritte spiegelnde Fläche S3. Diese Fläche S3 ist so angeordnet, dass das Lot L3 auf diese Fläche S3 bezüglich der ersten Ebene (hier: Zeichenebene) einen Azimut von $\gamma3 = 70.529°$ und bezüglich der Azimutebene eine Elevation von $\varepsilon3 = 16.779°$ einschliesst, wie in Fig. 1c zu erkennen ist. Der auf diese Fläche S3 auftreffende Strahl wird durch die Reflexion an dieser Fläche S3 aus der zweiten Ebene herausgedreht, die von dem die Fläche S2 beaufschlagenden Strahl bzw. von dem ersten Spiegelbild A1 der eingangsseitigen optischen Achse und dem von dieser Fläche S2 reflektierten Strahl bzw. dem zweiten Spiegelbild A2 der eingangsseitigen optischen Achse aufgespannt wird; in der hier gezeigten Darstellung (Fig. 1) spiegelt also die Fläche S3 den Strahl räumlich betrachtet von hinten heraus wieder in Richtung der Zeichenebene zurück. Dabei schliessen der von der zweiten Fläche S2 reflektierte und die Fläche S3 beaufschlagende Strahl bzw. das zweite Spiegelbild A2 der eingangsseitigen optischen Achse und der von der dieser Fläche S3 reflektierte Strahl bzw. das dritte Spiegelbild A3 der eingangsseitigen optischen Achse einen Winkel $\alpha3 = -90°$ ein.

Verfolgt man den Lichtweg weiter, so schneidet der Lichtstrahl die Verlängerung der eingangsseitigen optischen Achse wieder. In diesem Schnittpunkt trifft der von der dritten spiegelnden Fläche S3 reflektierte und entlang des dritten Spiegelbilds A3 der eingangsseitigen optischen Achse verlaufende Lichtstrahl auf die vierte spiegelnde Fläche S4. Diese Fläche S4 ist so angeordnet, dass das Lot L4 auf diese Fläche S4 bezüglich der ersten Ebene (hier: Zeichenebene) einen Azimut von γ4 = 150° und bezüglich der Azimutebene eine Elevation von ε4 = -35.260° aufweist. Der auf diese Fläche S4 auftreffende Strahl wird durch die Fläche S4 so reflektiert, dass der reflektierte Lichtstrahl bzw. das so erzeugte vierte Spiegelbild A4 der eingangsseitigen optischen Achse mit der ausgangsseitigen optischen Achse A5 zusammenfällt, die mit der eingangsseitigen optischen Achse A0 in derselben Gerade liegt. In der hier gezeigten Darstellung wird der Strahl also räumlich von hinten heraus kommend von der spiegelnden Fläche S4 wieder in Richtung der ausgangsseitigen optischen Achse A5 reflektiert, wobei der von der dritten Fläche S3 reflektierte und die Fläche S4 beaufschlagende Strahl bzw. das dritte Spiegelbild A3 der eingangsseitigen optischen Achse und der von der dieser Fläche S4 reflektierte Strahl bzw. das vierte Spiegelbild A4 der eingangsseitigen optischen Achse einen Winkel α4 = 90° einschliessen. Die Abstände D12,D23,D34 zwischen den spiegelnden Flächen S1 und S2, S2 und S3, S3 und S4 stehen bei dem erläuterten Ausführungsbeispiel im Verhältnis $\sqrt{2}$ : 1 : 1.

Mit Hilfe des strichliert angedeuteten Objektivs O, das im Lichtweg vor der ersten spiegelnden Fläche S1 bzw. nach der vierten spiegelnden Fläche S4 angeordnet ist, können Farbfehler und/oder geoemtrische optische Fehler, z. B. sphärische Aberration, kompensiert werden.

In einer praktischen Ausführung des Abbildungssystems kann der Abstand D23 beispielsweise 35-45 mm betragen, insbesondere etwa 40 mm. Die anderen Abstände D12 und D34 ergeben sich dann aus dem genannten Verhältnis der Abstände zueinander. Das ganze Abbildungssystem kann dabei also eine Länge in Richtung der eingangsseitigen bzw. ausgangsseitigen optischen Achse aufweisen (nicht die Länge des Lichtwegs!) von 100-130 mm, insbesondere von etwa 113,5 mm.

Die einzelnen spiegelnden Flächen S1,S2,S3,S4 können beispielsweise metallisch beschichtete (z.B. bedampfte) Glasflächen sein. Prinzipiell kann das Abbildungssystem aber auch einen einzigen Glaskörper umfassen, an dem die entsprechend angeordneten vier Reflexionsflächen (spiegelnden Flächen) vorgesehen sind. Das Licht tritt dann in den Glaskörper ein, wird im Glaskörper geführt und an den vier Reflexionsflächen gespiegelt und tritt dann wieder aus dem Glaskörper wieder aus. Ist es fertigungstechnisch nicht möglich, die Flächen an einem einzigen Glaskörper vorzusehen, können auch zwei oder mehrere Glaskörper miteinander verbunden werden. Die Führung des Lichts in einem oder mehreren Glaskörpern hat den Vorteil, dass die spiegelnden Flächen klein gehalten und die Flächen genau angeschliffen werden können, sodass genau justierbare Halterungen entfallen können.

Die Tatsache, dass das Licht durch Totalreflexion im Glaskörper geführt werden kann, hängt damit zusammen, dass Glas gegenüber der den Glaskörper umgebenden Luft das optisch dichtere Medium darstellt. Beispielsweise kann ein solcher Glaskörper aus dem handelsüblichen Glas SF1 der Firma Schott mit einem Brechungsindex von n = 1,71 gefertigt sein. Dies gilt selbstverständlich auch für den Fall, dass die spiegelnden Flächen als diskrete Flächen (und nicht als zusammenhängender Glaskörper) ausgebildet sind. Allerdings sind sie dann metallisch beschichtet, also verspiegelt.

In Fig. 2 ist ein weiteres Ausführungsbeispiel der Anordnung der spiegelnden Flächen S1,S2,S3,S4 dargestellt. Die in Fig. 2 dargestellte erste spiegelnde Fläche S1 ist dabei so angeordnet, dass der reflektierte Strahl und damit das erste Spiegelbild A1 der eingangsseitigen optischen Achse A0 ebenfalls wieder in der Zeichenebene verläuft, dass also der einfallende Strahl und der von der ersten spiegelnden Fläche S1 reflektierte Strahl bzw. die eingangsseitige optische Achse A0 und deren erstes Spiegelbild A1 eine Ebene aufspannen. Diese Ebene entspricht in der Fig. 2 ebenfalls wieder wie in Fig. 1 der Zeichenebene. Dabei beträgt der Einfallswinkel, der von dem entlang der eingangsseitigen optischen Achse A0 einfallenden Strahl und vom Lot L1 auf die erste spiegelnde Fläche S1 eingeschlossen wird, hier 60°, sodass der gesamte von der eingangsseitigen optischen Achse A0 und deren erstem Spiegelbild A1 eingeschlossene Winkel α1 = 120° beträgt.

Die übrige Funktionsweise dieses Ausführungsbeispiels des Abbildungssystems ist völlig analog der Funktionsweise wie sie anhand von Fig. 1 bereits erläutert ist. Die entsprechenden Winkel betragen dann für die spiegelnde Fläche S2: α2 = -90°, γ2 = 109.734° und ε2 = 64.296°. Für die spiegelnde Fläche S3 betragen diese Winkel dann α3 = - 90°, γ3 = 81.548° und ε3 = -4.850° und für die spiegelnde Fläche S4: α4 = 120°, γ4 = 121.482° und ε4 = -16.778°. Die Abstände D12,D23,D34 zwischen den spiegelnden Flächen stehen dabei in einem Verhältnis von 1 : $\sqrt{2}$ : 1.

Ein weiteres Ausführungsbeispiel der Anordnung der spiegelnden Flächen ist in Fig. 3 dargestellt. Die Funktionsweise dieses Ausführungsbeispiels ist analog der Funktionsweise der beiden anderen bereits erläuterten Ausführungsbeispiele. Die in Fig. 3 dargestellte erste spiegelnde Fläche S1 ist dabei so angeordnet, dass der reflektierte Strahl und damit das erste Spiegelbild A1 der eingangsseitigen optischen Achse A0 ebenfalls wieder in der Zeichenebene verläuft, dass also der einfallende Strahl und der von der ersten spiegelnden Fläche S1 reflektierte Strahl bzw. die eingangsseitige optische Achse A0 und deren erstes Spiegelbild A1 eine Ebene aufspannen. Diese Ebene entspricht in der Fig. 3 ebenfalls wieder wie in Fig. 1 und Fig. 2 der Zeichenebene. Dabei beträgt der Einfallswinkel, der von dem entlang der eingangsseitigen optischen Achse A0 einfallenden Strahl und vom Lot L1 auf die erste spiegelnde Fläche S1 eingeschlossen wird, hier 45°, sodass der gesamte von der eingangsseitigen optischen Achse A0 und deren erstem Spiegelbild A1 eingeschlossene Winkel α1 = 90° beträgt.

Die entsprechenden Winkel betragen dann für die spiegelnde Fläche S2: α2 = - 90°, γ2 = 138.093° und ε2 = 45°. Für die spiegelnde Fläche S3 betragen diese Winkel dann α3 = -67.68°, γ3 = 64.082° und ε3 = 31.821° und für die

EP 0 586 769 B1

spiegelnde Fläche S4: $\alpha4 = 90°$, $\gamma4 = 154.241°$ und $\varepsilon4 = -38.268°$. Die Abstände D12,D23,D34 zwischen den spiegelnden Flächen stehen dabei in einem Verhältnis von 1 : 0.7 : 1.1417.

Weitere Anordnungen sind nicht mehr in gesonderten Zeichnungsfiguren dargestellt, da sie alle in analoger Weise aufgebaut sind und in der gleichen Weise funktionieren. Zum in Fig. 2 gezeigten Ausführungsbeispiel sollen aber noch einige weitere mögliche Ausführungsbeispiele angeführt werden, da die in Fig. 2 gezeigte Variante eine Besonderheit aufweist: Man kann sich nämlich diese Variante des Abbildungssystems aus zwei gleichartigen Halbsystemen zusammengesetzt denken. Das zweite Halbsystem, welches die spiegelnden Flächen S3 und S4 umfasst, also das Halbsystem rechts von der senkrecht zur Zeichenebene verlaufende Trennebene T ergibt sich nämlich aus dem ersten Halbsystem, welches die spiegelnden Flächen S1 und S2 umfasst, indem man das erste Halbsystem zunächst an der Ebene T spiegelt und dieses an der Trennebene T gespiegelte Halbsystem dann um einen Winkel β in Richtung des Pfeils DW um die ausgangsseitige optische Achse A5 dreht.

In der nachfolgenden Tabelle sind solche Abbildungssysteme angeführt, die sich aus einem ersten Halbsystem und einem zweiten Halbsystem ergeben, wobei das zweite Halbsystem sich aus dem ersten Halbsystem durch Spiegelung des ersten Halbsystems an der Trennebene T und einer anschliessenden Drehung des an der Trennebene T gespiegelten ersten Halbsystems um die ausgangsseitige optische Achse A5 ergibt. Dabei erfolgt die Drehung um den Drehwinkel β, und zwar im Uhrzeigersinn, wenn man das gesamte Abbildungssystem von der ausgangsseitigen optischen Achse her betrachtet; in Fig. 2 erfolgt die Betrachtung des Abbildungssystems also von rechts her. Aufgrund der oben erläuterten Betrachtung bezüglich der Halbsysteme genügt es daher, in der Tabelle jeweils die Winkel γ1 und ε1 sowie γ2 und ε2 anzugeben, ferner die Abstände D12 und die Hälfte D23/2 des Abstands D23. Ferner muss auch der Drehwinkel β angegeben werden, um den das an der Trennebene T gespiegelte erste Halbsystem noch im Uhrzeigersinn, also in Richtung des Pfeils DW, um die ausgangsseitige optische Achse A5 gedreht werden muss, um das gesamte Abbildungssystem zu erhalten. Mit diesen Angaben ist dann das jeweilige System eindeutig bestimmt. Die negativen Vorzeichen bei den Winkeln ε1 deuten an, dass das Lot L1 sich unterhalb der Azimutebene erstreckt. Zusätzlich sind in der Tabelle jedoch der besseren Übersichtlichkeit halber die eingeschlossenen Winkel α1 und α2 zwischen der eingangsseitigen optischen Achse A0 und deren erstem Spiegelbild A1 bzw. zwischen A1 und deren Spiegelbild A2 ebenfalls angegeben. Wie leicht ersichtlich ist, entspricht das Beispiel b) der Tabelle dem in Fig. 2 beschriebenen Ausführungsbeispiel.

**Tabelle:**

|  | α1 | γ1 | ε1 | D12 | α2 | γ2 | ε2 | D23/2 | β |
|---|---|---|---|---|---|---|---|---|---|
| a) | 130° | 0° | −65° | 1 | −90° | 90.135° | 67.491° | 0.7075 | 89.9° |
| b) | 120° | 0° | −60° | 1 | −90° | 109.734° | 64.296° | 0.7071 | 70.53° |
| c) | 110° | 0° | −55° | 1 | −90° | 122.860° | 58.752° | 0.5596 | 47.219° |
| d) | 100° | 0° | −50° | 1 | −90° | 130.71° | 52.065° | 0.285 | 22.416° |

7

| e) | 120° | 0° | −60° | 1 | −80° | 119.15° | 61.310° | 0.631 | 51.798° |
| f) | 120° | 0° | −60° | 1 | −70° | 126.75° | 57.815° | 0.362 | 24.173° |
| g) | 120° | 0° | −60° | 1 | −100° | 98.243° | 66.56° | 0.7135 | 83.638° |
| h) | 110° | 0° | −55° | 1 | −100° | 114.54° | 62.308° | 0.6603 | 65.537° |

Aufgrund der Tatsache, dass sich ein solches Abbildungssystem aus zwei Halbsystemen gleicher Art zusammensetzen lässt, kann es auch einfach durch zwei Glaskörper realisiert werden, die an der Ebene T zusammengefügt (z. B. geklebt) werden. Mit derartigen Abbildungssystemen kann beispielsweise beim Einsatz in fotografischen Printern ein Bild einer Vorlage im Halbformat, welche um 90° gegenüber einer Vorlage im Vollformat gedreht ist, wieder um 90° gedreht werden, so dass das Bild der Vorlage im Halbformat in der gleichen Lage und Position auf das Papierband abgebildet bzw. aufbelichtet wird wie ein Bild einer Vorlage im Vollformat, bei der keine Drehung des Bilds erforderlich ist. Gleichzeitig weist das erfindungsgemässe Abbildungssystem eine minimale Anzahl von Spiegelflächen auf, sodass der Aufwand insbesondere hinsichtlich der genauen Justage der einzelnen spiegelnden Flächen minimiert wird. Besonders zweckmässig ist es, in einem Printer sowohl ein Abbildungssystem für Vorlagen im Vollformat vorzusehen, bei welchem das Bild für das Aufbelichten auf das Papier nicht gedreht werden muss, und zusätzlich noch ein Abbildungssystem für um 90° verdrehte Vorlagen im Halbformat, die beim Aufbelichten auf das Papier zunächst um 90° gedreht werden müssen. Beides kann in einer gemeinsamen Abbildungseinrichtung des Printers vorgesehen sein, wobei das je nach Typ der Vorlage erforderliche Abbildungssystem (um 90° drehend oder nicht drehend) automatisch in den Lichtweg beim Aufbelichten eingebracht werden kann. Dadurch können aufwendige Mittel zur Steuerung des Vorschubs des Papiers zur Schneideeinrichtung entfallen, da alle Kopien eine einheitliche Lage und Breite haben. Dies erhöht die Effizienz eines solchen Printers bzw. einer solchen fotografischen Verarbeitungsstrecke.

**Patentansprüche**

1. Optisches Abbildungssystem mit einer geraden Anzahl spiegelnder Flächen zur Erzeugung eines gegenüber dem abzubildenden Gegenstand um 90° verdrehten Bildes in einer zur Gegenstandsebene parallelen Bildebene, wobei die eingangsseitige optische Achse und die ausgangsseitige optische Achse in derselben Geraden liegen, dadurch gekennzeichnet, dass das Abbildungssystem nur vier spiegelnde Flächen (S1,S2,S3,S4) umfasst, wobei die im Lichtweg erste spiegelnde Fläche (S1) ein erstes Spiegelbild der eingangsseitigen optischen Achse (A0) erzeugt, und wobei dieses erste Spiegelbild (A1) der eingangsseitigen optischen Achse (A0) zusammen mit der eingangsseitigen optischen Achse eine erste Ebene aufspannt,

   wobei ferner die im Lichtweg der ersten spiegelnden Fläche (S1) nachfolgende zweite spiegelnde Fläche (S2) ein zweites Spiegelbild (A2) der eingangsseitigen optischen Achse (A0) erzeugt und dieses zweite Spiegelbild (A2) der eingangsseitigen optischen Achse aus der ersten Ebene heraustritt, sodass das erste (A1) und das zweite (A2) Spiegelbild der eingangsseitigen optischen Achse (A0) eine von der ersten Ebene verschiedene zweite Ebene aufspannen,
   wobei ferner die im Lichtweg der zweiten spiegelnden Fläche (A2) nachfolgende dritte spiegelnde Fläche (S3) ein drittes Spiegelbild (A3) der eingangsseitigen optischen Achse (A0) erzeugt und dieses dritte Spiegelbild (A3) der eingangsseitigen optischen Achse (A0) aus der zweiten Ebene heraustritt und die Verlängerung der eingangsseitigen (A0) bzw. der ausgangsseitigen (A5) optischen Achse schneidet,
   und wobei die im Lichtweg der dritten spiegelnden Fläche (S3) nachfolgende vierte spiegelnde Fläche (S4) ein viertes Spiegelbild (A4) der eingangsseitigen optischen Achse (A0) erzeugt, welches mit der ausgangsseitigen optischen Achse (A5) zusammenfällt.

2. Optisches Abbildungssytem nach Anspruch 1, dadurch gekennzeichnet,

dass die eingangsseitige optische Achse (A0) mit dem Lot (L1) auf die erste spiegelnde Fläche (S1) einen Einfallswinkel von 45° bis 60° einschliesst,

dass das Lot (L2) auf die zweite spiegelnde Fläche (S2) bezüglich der ersten Ebene einen Azimut ($\gamma$2) von 45° bis 120° und bezüglich der Azimutebene eine Elevation ($\varepsilon$2) von 40° bis 70° aufweist,

dass das Lot (L3) auf die dritte spiegelnde Fläche (S3) bezüglich der ersten Ebene einen Azimut ($\gamma$3) von 60° bis 85° und bezüglich der Azimutebene eine Elevation ($\varepsilon$3) von -10° bis 45° aufweist,

und dass das Lot (L4) auf die vierte spiegelnde Fläche (S4) bezüglich der ersten Ebene einen Azimut ($\gamma$4) von 120° bis 160° und bezüglich der Azimutebene eine Elevation ($\varepsilon$4) von -15° bis -45° aufweist.

3. Optisches Abbildungssytem nach Anspruch 1 oder 2, dadurch gekennzeichnet,

dass die eingangsseitige optische Achse (A0) mit dem Lot (L1) auf die erste spiegelnde Fläche (S1) einen Einfallswinkel von 60° einschliesst,

dass das Lot (L2) auf die zweite spiegelnde Fläche (S2) bezüglich der ersten Ebene einen Azimut ($\gamma$2) von 109° bis 110°, insbesondere einen Azimut von 109.734°, und bezüglich der Azimutebene eine Elevation ($\varepsilon$2) von 64° bis 65°, insbesondere eine Elevation von 64.296°, aufweist,

dass das Lot (L3) auf die dritte spiegelnde Fläche (S3) bezüglich der ersten Ebene einen Azimut ($\gamma$3) von 70° bis 71°, insbesondere einen Azimut von 70.529°, und bezüglich der Azimutebene eine Elevation ($\varepsilon$3) von 16° bis 17°, insbesondere eine Elevation von 16.779°, aufweist,

und dass das Lot (L4) auf die vierte spiegelnde Fläche (S4) bezüglich der ersten Ebene einen Azimut ($\gamma$4) von 149° bis 151°, insbesondere einen Azimut von 150°, und bezüglich der Azimutebene eine Elevation ($\varepsilon$4) von -35° bis -36°, insbesondere eine Elevation von -35.260° aufweist.

4. Optisches Abbildungssystem nach Anspruch 3, dadurch gekennzeichnet, dass das Verhältnis der Längen der Lichtwege (D12,D23,D34) von der ersten spiegelnden Fläche (S1) zur zweiten spiegelnden Fläche (S2), von der zweiten (S2) zur dritten Fläche (S3) und von der dritten (S3) zur vierten Fläche (S4) $\sqrt{2}$ :1:1 beträgt.

5. Optisches Abbildungssystem nach Anspruch 1 oder 2, dadurch gekennzeichnet, dass es ein erstes (HS1) und ein zweites (HS2) gleichartiges Halbsystem mit jeweils zwei spiegelnden Flächen (S1,S2;S3,S4) umfasst, wobei das zweite Halbsystem (HS2) so angeordnet ist, dass dessen Anordnung aus der Anordnung des ersten Halbsystems (HS1) durch eine Spiegelung dieses ersten Halbsystems an einer zur optischen Achse senkrechten Trennebene (T) und durch anschliessende Drehung des gespiegelten ersten Halbsystems um einen Drehwinkel ($\beta$) um die ausgangsseitige optische Achse (A5) hervorgeht.

6. Optisches Abbildungssytem nach einem der Ansprüche 1 oder 2 oder nach Anspruch 5, dadurch gekennzeichnet,

dass die eingangsseitige optische Achse (A0) mit dem Lot (L1) auf die erste spiegelnde Fläche (S1) einen Einfallswinkel von 60° einschliesst,

dass das Lot (L2) auf die zweite spiegelnde Fläche (S2) bezüglich der ersten Ebene einen Azimut ($\gamma$2) von 109° bis 110°, insbesondere einen Azimut von 109.734°, und bezüglich der Azimutebene eine Elevation ($\varepsilon$2) von 64° bis 65°, insbesondere eine Elevation von 64.296°, aufweist,

dass das Lot (L3) auf die dritte spiegelnde Fläche (S3) bezüglich der ersten Ebene einen Azimut ($\gamma$3) von 81° bis 82°, insbesondere einen Azimut von 81.548°, und bezüglich der Azimutebene eine Elevation ($\varepsilon$3) von -4° bis -5°, insbesondere eine Elevation von -4.850°, aufweist,

und dass das Lot (L4) auf die vierte spiegelnde Fläche (S4) bezüglich der ersten Ebene einen Azimut ($\gamma$4) von 121° bis 122°, insbesondere einen Azimut von 121.482°, und bezüglich der Azimutebene eine Elevation ($\varepsilon$4) von -16° bis -17°, insbesondere eine Elevation von -16.778°, aufweist.

7. Optisches Abbildungssystem nach Anspruch 6, dadurch gekennzeichnet, dass das Verhältnis der Längen der Lichtwege (D12,D23,D34) von der ersten spiegelnden Fläche (S1) zur zweiten spiegelnden Fläche (S2), von der zweiten (S2) zur dritten Fläche (S3) und von der dritten (S3) zur vierten Fläche (S4) 1: $\sqrt{2}$ :1 beträgt.

8. Optisches Abbildungssytem nach einem der Ansprüche 1 oder 2, dadurch gekennzeichnet,

dass die eingangsseitige optische Achse (A0) mit dem Lot (L1) auf die erste spiegelnde Fläche (S1) einen Einfallswinkel von 45° einschliesst,

dass das Lot (L2) auf die zweite spiegelnde Fläche (S2) bezüglich der ersten Ebene einen Azimut ($\gamma$2) von 138° bis 139°, insbesondere einen Azimut von 138.093°, und bezüglich der Azimutebene eine Elevation ($\varepsilon$2)

von 44° bis 46°, insbesondere eine Elevation von 45°, aufweist,

dass das Lot (L3) auf die dritte spiegelnde Fläche (S3) bezüglich der ersten Ebene einen Azimut (γ3) von 64° bis 65°, insbesondere einen Azimut von 64.082°, und bezüglich der Azimutebene eine Elevation (ε3) von 31° bis 32°, insbesondere eine Elevation von 31.821°, aufweist,

und dass das Lot (L4) auf die vierte spiegelnde Fläche (S4) bezüglich der ersten Ebene einen Azimut (γ4) von 154° bis 155°, insbesondere einen Azimut von 154.241°, und bezüglich der Azimutebene eine Elevation (ε4) von -38° bis -39°, insbesondere eine Elevation von -38.268°, aufweist.

9. Optisches Abbildungssystem nach Anspruch 8, dadurch gekennzeichnet, dass das Verhältnis der Längen der Lichtwege (D12,D23,D34) von der ersten spiegelnden Fläche (S1) zur zweiten spiegelnden Fläche (S2), von der zweiten (S2) zur dritten Fläche (S3) und von der dritten (S3) zur vierten Fläche (S4) 1:0.7:1.1417 beträgt.

## Claims

1. An optical imaging system comprising an even number of reflecting surfaces for producing an image which is rotated through 90° relative to the object to be imaged in an image plane parallel to the plane of the object, the incoming optical axis and the outgoing optical axis lying on the same straight line, wherein the imaging system comprises only four reflecting surfaces (S1, S2, S3, S4):

   the first reflecting surface (S1) in the optical path produces a first mirror image of the incoming optical axis (A0) and that first mirror image (A1) of the incoming optical axis (A0) together with the incoming optical axis defines a first plane,

   the second reflecting surface (S2) that follows the first reflecting surface (S1) in the optical path produces a second mirror image (A2) of the incoming optical axis (A0) and that second mirror image (A2) of the incoming optical axis leaves the first plane so that the first (A1) and second (A2) mirror images of the incoming optical axis (A0) define a second plane different from the first plane,

   the third reflecting surface (S3) that follows the second reflecting surface (A2) in the optical path produces a third mirror image (A3) of the incoming optical axis (A0) and that third mirror image (A3) of the incoming optical axis (A0) leaves the second plane and intersects the extension of the incoming (A0) or outgoing (A5) optical axis,

   and the fourth reflecting surface (S4) following the third reflecting surface (S3) in the optical path produces a fourth mirror image (A4) of the incoming optical axis (A0), said fourth mirror image coinciding with the outgoing optical axis (A5).

2. An optical imaging system according to claim 1, wherein

   the incoming optical axis (A0) includes an angle of incidence of 45° to 60° with the perpendicular (L1) to the first reflecting surface (S1),

   the perpendicular (L2) to the second reflecting surface (S2) has an azimuth (γ2) of 45° to 120° relative to the first plane and an elevation (ε2) of 40° to 70° relative to the azimuth plane,

   the perpendicular (L3) to the third reflecting surface (S3) has an azimuth (γ3) of 60° to 85° relative to the first plane and an elevation (ε3) of -10° to 45° relative to the azimuth plane,

   and the perpendicular (L4) to the fourth reflecting surface (S4) has an azimuth (γ4) of 120° to 160° relative to the first plane and an elevation (ε4) of -15° to -45° relative to the azimuth plane.

3. An optical imaging system according to either claim 1 or claim 2, wherein

   the incoming optical axis (A0) includes an angle of incidence of 60° with the perpendicular (L1) to the first reflecting surface (S1),

   the perpendicular (L2) to the second reflecting surface (S2) has an azimuth (γ2) of 109° to 110°, especially an azimuth of 109.734°, relative to the first plane and an elevation (ε2) of 64° to 65°, especially an elevation of 64.296°, relative to the azimuth plane,

   the perpendicular (L3) to the third reflecting surface (S3) has an azimuth (γ3) of 70° to 71°, especially an azimuth of 70.529°, relative to the first plane and an elevation (ε3) of 16° to 17°, especially an elevation of 16.779°, relative to the azimuth plane,

   and the perpendicular (L4) to the fourth reflecting surface (S4) has an azimuth (γ4) of 149° to 151°, especially an azimuth of 150°, relative to the first plane and an elevation (ε4) of -35° to -36°, especially an elevation of -35.260°, relative to the azimuth plane.

4. An optical imaging system according to claim 3, wherein the ratio of the lengths of the optical paths (D12, D23, D34) from the first reflecting surface (S1) to the second reflecting surface (S2), from the second (S2) to the third surface (S3), and from the third (S3) to the fourth surface (S4) is $\sqrt{2}$ : 1 : 1.

5. An optical imaging system according to either claim 1 or claim 2, wherein a first half-system (HS1) and a second half-system (HS2) identical to the first half-system, each with two reflecting surfaces (S1, S2; S3, S4), are provided, the second half-system (HS2) being so arranged that its configuration is derived from the configuration of the first half-system (HS1) in that the first half-system is reflected onto a separating plane (T) that is perpedicular to the optical axis and the reflected first half-system is then rotated through an angle (β) of rotation about the outgoing optical axis (A5).

6. An optical imaging system according to either claim 1 or claim 2 or according to claim 5, wherein

the incoming optical axis (A0) includes an angle of incidence of 60° with the perpendicular (L1) to the first reflecting surface (S1),
the perpendicular (L2) to the second reflecting surface (S2) has an azimuth (γ2) of 109° to 110°, especially an azimuth of 109.734°, relative to the first plane and an elevation (ε2) of 64° to 65°, especially an elevation of 64.296°, relative to the azimuth plane,
the perpendicular (L3) to the third reflecting surface (S3) has an azimuth (γ3) of 81° to 82°, especially an azimuth of 81.548°, relative to the first plane and an elevation (ε3) of -4° to -5°, especially an elevation of -4.850°, relative to the azimuth plane,
and the perpendicular (L4) to the fourth reflecting surface (S4) has an azimuth (γ4) of 121° to 122°, especially an azimuth of 121.482°, relative to the first plane and an elevation (ε4) of -16° to -17°, especially an elevation of -16.778°, relative to the azimuth plane.

7. An optical imaging system according to claim 6, wherein the ratio of the lengths of the optical paths (D12, D23, D34) from the first reflecting surface (S1) to the second reflecting surface (S2), from the second (S2) to the third surface (S3), and from the third (S3) to the fourth surface (S4) is 1 : $\sqrt{2}$ : 1.

8. An optical imaging system according to either claim 1 or claim 2, wherein

the incoming optical axis (A0) includes an angle of incidence of 45° with the perpendicular (L1) to the first reflecting surface (S1),
the perpendicular (L2) to the second reflecting surface (S2) has an azimuth (γ2) of 138° to 139°, especially an azimuth of 138.093°, relative to the first plane and an elevation (ε2) of 44° to 46°, especially an elevation of 45°, relative to the azimuth plane,
the perpendicular (L3) to the third reflecting surface (S3) has an azimuth (γ3) of 64° to 65°, especially an azimuth of 64.082°, relative to the first plane and an elevation (ε3) of 31° to 32°, especially an elevation of 31.821°, relative to the azimuth plane,
and the perpendicular (L4) to the fourth reflecting surface (S4) has an azimuth (γ4) of 154° to 155°, especially an azimuth of 154.241°, relative to the first plane and an elevation (ε4) of -38° to -39°, especially an elevation of -38.268°, relative to the azimuth plane.

9. An optical imaging system according to claim 8, wherein the ratio of the lengths of the optical paths (D12, D23, D34) from the first reflecting surface (S1) to the second reflecting surface (S2), from the second (S2) to the third surface (S3), and from the third (S3) to the fourth surface (S4) is 1 : 0.7 : 1.1417.

**Revendications**

1. Système optique de reproduction comportant un nombre pair de surfaces réfléchissantes pour produire une image, tournée de 90° par rapport à l'objet à reproduire, dans un plan image parallèle au plan objet, dans lequel l'axe optique côté entrée et l'axe optique côté sortie sont situés sur la même droite, caractérisé par le fait que le système de reproduction ne comporte que quatre surfaces réfléchissantes (S1,S2,S3,S4), étant précisé que la première surface réfléchissante (S1) sur le trajet de la lumière produit une première image réfléchie de l'axe optique côté entrée (A0) et que cette première image réfléchie (A1) de l'axe optique côté entrée (A0) définit avec l'axe optique côté entrée un premier plan,

étant précisé en outre que la seconde surface réfléchissante (S2), qui suit la première surface réfléchissante (S1) sur le trajet de la lumière, produit une seconde image réfléchie (A2) de l'axe optique côté entrée (A0) et que cette seconde image réfléchie (A2) de l'axe optique côté entrée sort hors du premier plan, de sorte que la première (1) et la seconde (A2) images réfléchies de l'axe optique côté entrée (A0) définissent un second plan différent du premier plan,

étant précisé en outre que la troisième surface réfléchissante (S3), qui suit la seconde surface réfléchissante (A2) sur le trajet de la lumière, produit une troisième image réfléchie (A3) de l'axe optique côté entrée (A0) et que cette troisième image réfléchie (A3) de l'axe optique côté entrée (A0) sort hors du second plan et intersecte le prolongement de l'axe optique côté entrée (A0) ou côté sortie (A5), et étant précisé que la quatrième surface réfléchissante (S4), qui suit la troisième surface réfléchissante (S3) sur le trajet de la lumière, produit une quatrième image réfléchie (A4) de l'axe optique côté entrée (A0) qui coïncide avec l'axe optique côté sortie (A5).

2. Système optique de reproduction selon la revendication 1, caractérisé par le fait

que l'axe optique côté entrée (A0) fait avec la perpendiculaire (L1) à la première surface réfléchissante (SI) un angle d'incidence de 45° à 60°,

que la perpendiculaire (L2) à la seconde surface réfléchissante (S2) présente, par rapport au premier plan, un angle d'azimut ($\gamma$2) de 45° à 120° et, dans le plan d'azimut, un angle d'élévation ($\varepsilon$2) de 40° à 70°,

que la perpendiculaire (L3) à la troisième surface réfléchissante (S3) présente, par rapport au premier plan, un angle d'azimut ($\gamma$3) de 60° à 85° et, dans le plan d'azimut, un angle d'élévation ($\varepsilon$3) de -10° à 45°,

et que la perpendiculaire (L4) à la quatrième surface réfléchissante (S4) présente, par rapport au premier plan, un angle d'azimut (($\gamma$4) de 120° à 160° et, dans le plan d'azimut, un angle d'élévation ($\varepsilon$4) de 15° à 45°.

3. Système optique de reproduction selon la revendication 1 ou 2, caractérisé par le fait

que l'axe optique côté entrée (A0) fait avec la perpendiculaire (L1) à la première surface réfléchissante (S1) un angle d'incidence de 60°,

que la perpendiculaire (L2) à la seconde surface réfléchissante (S2) présente, par rapport au premier plan, un angle d'azimut ($\gamma$2) de 109° à 110°, en particulier un angle d'azimut de 109,734° et, dans le plan d'azimut, un angle d'élévation ($\varepsilon$2) 64° à 65°, en particulier un angle d'élévation de 64,296°,

que la perpendiculaire (L3) à la troisième surface réfléchissante (S3) présente, par rapport au premier plan, un angle d'azimut ($\gamma$3) de 70° à 71°, en particulier un angle d'azimut de 70,529°, et, dans le plan d'azimut, un angle d'élévation ($\varepsilon$3) de 16° à 17°, en particulier un angle d'élévation de 16,779°,

et que la perpendiculaire (L4) à la quatrième surface réfléchissante (S4) présente, par rapport au premier plan, un angle d'azimut ($\gamma$4) de 149° à 151°, en particulier un angle d'azimut de 150°, et, dans le plan d'azimut, un angle d'élévation ($\varepsilon$4) de -35° à -36°, en particulier un angle d'élévation de -35,260°.

4. Système optique de reproduction selon la revendication 3, caractérisé par le fait que le rapport des longueurs des trajets de la lumière (D12,D23,D34) de la première surface réfléchissante (S1) à la seconde surface réfléchissante (2), de la seconde (S2) à la troisième surface (S3) et de la troisième (S3) à la quatrième surface (S4) vaut $\sqrt{2}$:1:1.

5. Système optique de reproduction selon la revendication 1 ou 2, caractérisé par le fait qu'il comporte un premier (HS1) et un second (HS2) demi-systèmes identiques comprenant chacun deux surfaces réfléchissantes (S1,S2; S3,S4), étant précisé que le second demi-sytème (HS2) est disposé de façon que sa disposition se déduise de la disposition du premier demi-système (HS1) par une symétrie de ce premier demi-système par rapport à un plan de séparation (T) perpendiculaire à l'axe optique et par une rotation, à la suite, du premier demi-système, obtenu par symétrie, d'un angle de rotation ($\beta$) autour de l'axe optique côté sortie (A5).

6. Système optique de reproduction selon l'une des revendications 1 ou 2 ou selon la revendication 5, caractérisé par le fait,

que l'axe optique côté entrée (A0) fait avec la perpendiculaire (L1) à la première surface réfléchissante (S1) un angle d'incidence de 60°,

que la perpendiculaire (L2) à la seconde surface réfléchissante (S2) présente, par rapport au premier plan, un angle d'azimut ($\gamma$2) de 109° à 110°, en particulier un angle d'azimut de 109,734°, et, dans le plan d'azimut, un angle d'élévation (ε2) de 64° à 65°, en particulier un angle d'élévation de 64,296°,

que la perpendiculaire (L3) à la troisième surface réfléchissante (S3) présente, par rapport au premier plan, un angle d'azimut (γ3) de 81 à 82°, en particulier un angle d'azimut de 81,548°, et, dans le plan d'azimut, un angle d'élévation (ε3) de -4° à -5°, en particulier un angle d'élévation de -4,850°,

et que la perpendiculaire (L4) à la quatrième surface réfléchissante (S4) présente, par rapport au premier plan, un angle d'azimut (γ4) de 121° à 122°, en particulier un angle d'azimut de 121,482° et, dans le plan d'azimut, un angle d'élévation (ε4) de -16° à -17°, en particulier un angle d'élévation de -16,778°.

7. Système optique de reproduction selon la revendication 6, caractérisé par le fait que le rapport des longueurs des trajets de la lumière (D12,D23,D34) de la première surface réfléchissante (S1) à la seconde surface réfléchissante (S2), de la seconde (S2) à la troisième surface (S3) et de la troisième (S3) à la quatrième surface (S4) vaut $1:\sqrt{2}:1$.

8. Système optique de reproduction selon l'une des revendications 1 ou 2, caractérisé par le fait,

que l'axe optique côté entrée (A0) fait avec la perpendiculaire (L1) à la première surface réfléchissante (S1) un angle d'incidence de 45°,

que la perpendiculaire (L2) à la seconde surface réfléchissante (S2) présente, par rapport au premier plan, un angle d'azimut (γ2) de 138° à 139°, en particulier un angle d'azimut de 138,093°, et, dans le plan d'azimut, un angle d'élévation (ε2) de 44° à 46°, en particulier un angle d'élévation de 45°,

que la perpendiculaire (L3) à la troisième surface réfléchissante (S3) présente, par rapport au premier plan, un angle d'azimut (γ3) de 64 à 65°, en particulier un angle d'azimut de 64,082°, et, dans le plan d'azimut, un angle d'élévation (ε3) de 31° à 32°, en particulier un angle d'élévation de -31,821°,

et que la perpendiculaire (L4) à la quatrième surface réfléchissante (S4) présente, par rapport au premier plan, un angle d'azimut (γ4) de 154° à 155°, en particulier un angle d'azimut de 154,241° et, dans le plan d'azimut, un angle d'élévation (ε4) de -38° à -39°, en particulier un angle d'élévation de -38,268°.

9. Système optique de reproduction selon la revendication 8, caractérisé par le fait que le rapport des longueurs des trajets de la lumière (D12,D23,D34) de la première surface réfléchissante (S1) à la seconde surface réfléchissante (2), de la seconde (S2) à la troisième surface (S3) et de la troisième (S3) à la quatrième surface (S4) vaut 1;0,7:1,1417.

**Fig. 1**

**Fig. 1a**

**Fig. 1b**

*Fig. 1c*

*Fig. 1d*

Fig. 2

Fig. 2a

Fig. 2b

ε 3

L3

γ3

**Fig. 2**c

ε 4

L4

γ4

**Fig. 2**d

**Fig. 3**

*Fig. 3a*

*Fig. 3b*

Fig. 3c

Fig. 3d